# EUROPEAN PATENT APPLICATION

(11) **EP 4 456 219 A1**
(43) Date of publication of application: **30.10.2024**
(21) Application number: 21968838.9
(22) Date of filing: 21.12.2021
(51) Int. Cl.: H01M 10/04

(54) **METHOD FOR MANUFACTURING SECONDARY BATTERY**

(71) Applicant: Kyocera Corporation, Kyoto-shi, Kyoto 612-8501 (JP)
(72) Inventor: FUKUSHIMA, Takaaki, Kyoto-shi, Kyoto 612-8501 (JP); MURAO, Akira, Kyoto-shi, Kyoto 612-8501 (JP)
(74) Representative: TBK
(86) International application number: PCT/JP2021/047238
(87) International publication number: WO 2023/119401

(57) **Abstract**

A manufacturing method of a secondary battery includes: first pressure reducing of reducing a pressure in an atmosphere of an electrode body comprising a positive electrode material, a negative electrode material, and an electrolyte; preliminary charging of preliminarily charging the electrode body; pressure increasing of increasing the pressure in the atmosphere of the electrode body after the first pressure reducing and at least during the preliminary charging; and second pressure reducing of reducing the pressure in the atmosphere of the electrode body after the pressure increasing and at least during the preliminary charging.

## Description

### TECHNICAL FIELD

The present disclosure relates to a manufacturing method of a secondary battery.

### BACKGROUND OF INVENTION

Patent document 1 discloses an example of a manufacturing method of a nonaqueous electrolyte secondary battery. The manufacturing method includes a step of adjusting a negative electrode potential of a gas-permeable secondary battery body in a state where gas can mutually flow between the inside and the outside of the cell to 0.65 to 1.45 V (vs. Li/Li⁺), and store the gas-permeable secondary battery body under an environment of an air pressure of 0.07 MPa or less and a temperature of 20 °C to 45 °C.

### CITATION LIST

### PATENT LITERATURE

Patent Document 1: JP 2015-15087 A

### SUMMARY

### SOLUTION TO PROBLEM

A manufacturing method of a secondary battery according to an aspect of the present disclosure includes: first pressure reducing of reducing a pressure in an atmosphere of an electrode body including a positive electrode material, a negative electrode material, and an electrolyte; preliminary charging of preliminarily charging the electrode body; pressure increasing of increasing the pressure in the atmosphere of the electrode body after the first pressure reducing and at least during the preliminary charging; and second pressure reducing of reducing the pressure in the atmosphere of the electrode body after the pressure increasing and at least during the preliminary charging.

### BRIEF DESCRIPTION OF THE DRAWINGS

FIG. 1 is a perspective view illustrating an appearance of a secondary battery according to the present disclosure.
FIG. 2 is a perspective view illustrating an appearance of a unit cell according to the present disclosure.
FIG. 3 is an exploded model view illustrating a cross section taken along a line III-III of FIG. 1.
FIG. 4 is an exploded model view illustrating a cross section taken along a line IV-IV of FIG. 1.
FIG. 5 is a model view illustrating a specific structure of an electrode body.
FIG. 6 is a flowchart illustrating an example of a manufacturing method of a secondary battery according to the present disclosure.
FIG. 7 is a schematic view illustrating an example of a schematic configuration of a preliminary charging device according to the present disclosure.
FIG. 8 is an exploded model view illustrating a state in which a spacer is arranged between two trays adjacent to each other in the vertical direction.
FIG. 9 is a flowchart illustrating an example of a process executed by the preliminary charging device according to the present disclosure.

### DESCRIPTION OF EMBODIMENTS

In the present embodiment, a specific process of executing preliminary charging on a secondary battery being manufactured will be mainly described. The preliminary charging may be first charging of the secondary battery during manufacture. In the present embodiment, prior to the description of the specific process, an example of a configuration of a secondary battery and a manufacturing process of the secondary battery will be described.

### Configuration of Secondary Battery

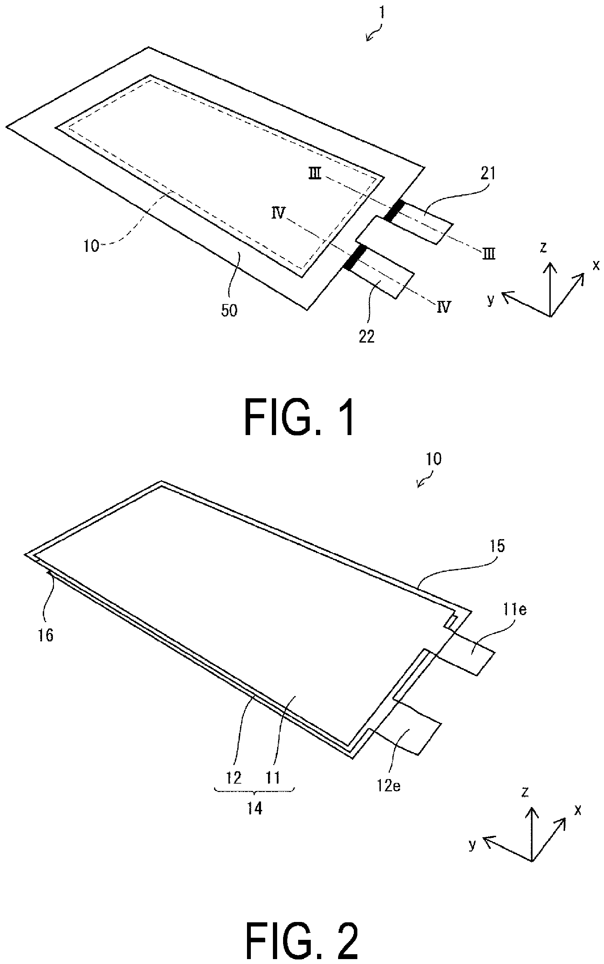

FIG. 1 is a perspective view illustrating an appearance of a secondary battery 1. The secondary battery 1 is a cell that can be charged or discharged by being electrically connected to an external terminal. For example, at least one secondary battery 1 may be mounted on a power storage device for houses, base stations, vehicles, robots such as drones, or medical devices. The secondary battery 1 may include a unit cell 10, connection terminals 21 and 22, and a second housing body 50. The configuration of the unit cell 10 will be described later.

The second housing body 50 may house the unit cell 10. The second housing body 50 may be made of, for example, an aluminum pouch film or a laminate film having a metal foil layer of stainless steel, nickel, or the like. The aluminum pouch film may be a film on which aluminum is vapor-deposited, or a laminate of an aluminum foil and a film. The material of the film may be, for example, polypropylene, polyethylene, nylon, or polyethylene terephthalate. The thickness of the second housing body 50 may be 50 µm or more and 300 µm or less, and may be 200 µm, for example.

When the second housing body 50 is an aluminum pouch film, the second housing body 50 may have a configuration in which two aluminum pouch films are located on both sides in the stacking direction (Z-axis direction) of the unit cell 10. When the second housing body 50 is an aluminum pouch film, the second housing body 50 may have a configuration in which one aluminum pouch film is folded in two and the unit cell 10 is located therein.

The connection terminals 21 and 22 may be terminals connected to the external terminal in order to take out electric power from the secondary battery 1 or supply electric power to the secondary battery 1. The connection terminals 21 and 22 may protrude from the inside to the outside of the second housing body 50. The material of the connection terminals 21 and 22 may be, for example, copper, aluminum, or nickel. The thickness of each of the connection terminals 21 and 22 may be 50 µm or more and 500 µm or less, for example, 200 µm. The connection terminals 21 and 22 may be subjected to a surface treatment for improving adhesion to an adhesive member (not illustrated). The adhesive member adheres the connection terminals 21 and 22 to the second housing body 50 located above and below the connection terminals 21 and 22 in order to determine the positions of the connection terminals 21 and 22 with respect to the second housing body 50.

FIG. 2 is a perspective view illustrating an appearance of the unit cell 10. As illustrated in FIG. 2, the unit cell 10 may include an electrode body 14 and a first housing body 15. The electrode body 14 may have a sheet-like shape. The electrode body 14 having a sheet-like shape may include a positive electrode 11 and a negative electrode 12.

The first housing body 15 may house the electrode body 14. In a case where a plurality of first housing bodies 15 that house the electrode body 14 are stacked, the plurality of first housing bodies 15 may be adhered to each other by an adhesive layer (not illustrated). The material of the first housing body 15 may be, for example, film-shaped polyethylene terephthalate (PET) or nylon. More specifically, for example, two first housing bodies 15 may be located on both sides in the stacking direction (Z-axis direction) of the unit cells 10. The thickness of the base material of the first housing body 15 may be, for example, 10 µm or more and 40 µm or less, and may be, for example, 25 µm. The material of the adhesive layer may be, for example, polypropylene or polyethylene.

The first housing body 15 may be, for example, transparent. FIG. 2 is a view illustrating a state in which the electrode body 14 can be seen through the first housing body 15 by using the transparent first housing body 15 in the unit cell 10.

The first housing body 15 may have a cutout portion 16. For example, the cutout portion 16 may be provided in each of the first housing body 15 on the positive electrode 11 side and the first housing body 15 on the negative electrode 12 side. By providing the cutout portion 16 as an unsealed portion in part of the unit cell 10, a gas generated by a decomposition reaction of an electrolytic solution or a small amount of moisture in the unit cell 10 can be released to the outside of the unit cell 10. A configuration may be adopted in which a portion on the positive electrode 11 side and a portion on the negative electrode 12 side are exposed from the first housing body 15 by providing the cutout portion 16. A portion of the positive electrode 11 side and a portion of the negative electrode 12 side may not be exposed from the first housing body 15. In the latter case, the unit cell 10 may have a configuration in which the internal space on the positive electrode 11 side of the unit cell 10 communicates with the external space of the unit cell 10, and a configuration in which the internal space on the negative electrode 12 side of the unit cell 10 communicates with the external space of the unit cell 10. The first housing body 15 on the negative electrode 12 side may be exposed at the position of the cutout portion 16 on the positive electrode 11 side, and the first housing body 15 on the positive electrode 11 side may be exposed at the position of the cutout portion 16 on the negative electrode 12 side.

The positive electrode 11 may have an exposed portion 11e exposed from the first housing body 15. The negative electrode 12 may have an exposed portion 12e exposed from the first housing body 15. The connection terminals 21 and 22 may be electrically connected to the exposed portions 11e and 12e, respectively, by ultrasonic welding, laser welding, or resistance welding, for example. Details of the positive electrode 11 and the negative electrode 12 will be described later.

The secondary battery 1 may have a configuration in which the unit cell 10 in which the positive electrode 11 and the negative electrode 12 are housed in the first housing body 15 is further housed in the second housing body 50. With this configuration, the electrode bodies 14 are doubly housed, so that the stability of the secondary battery 1 can be enhanced. The second housing body 50 may be housed in another housing body. However, the secondary battery 1 may include the positive electrode 11 and the negative electrode 12, and is housed in at least one housing body.

In the first embodiment, the secondary battery 1 has a configuration in which the plurality of unit cells 10 are stacked, for example, a configuration in which ten layers of the unit cells 10 are stacked. However, the secondary battery 1 according to the present disclosure may include a plurality of layers different from ten layers of the unit cells 10 or may include only one layer of the unit cell 10. When the secondary battery 1 includes a plurality of layers of the unit cells 10, the unit cells 10 may be stacked. In a plan view of the secondary battery 1 illustrated in FIG. 1, a portion other than the connection terminals 21 and 22 may have a substantially rectangular shape or a different shape. In a plan view of the unit cell 10 illustrated in FIG. 2, a portion other than the exposed portions 11e and 12e may have a substantially rectangular shape or may have a different shape.

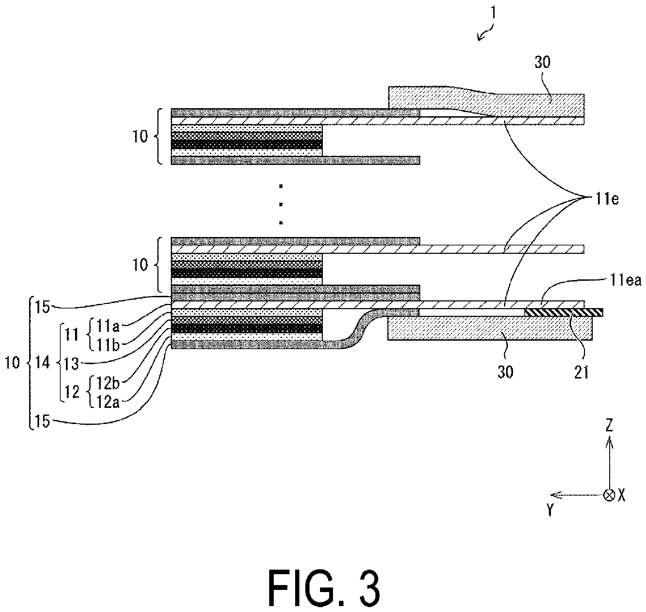

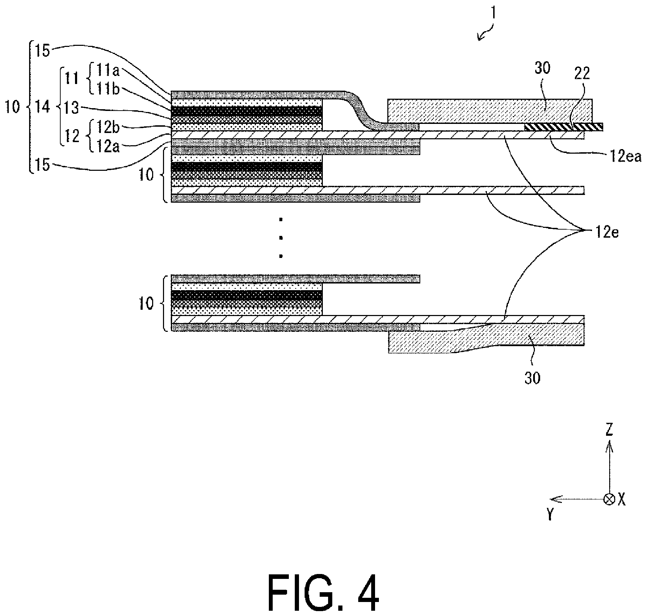

FIG. 3 is an exploded model view of a cross section taken along a line III-III of FIG. 1. FIG. 4 is an exploded model view of a cross section taken along a line IV-IV of FIG. 1. For the sake of simplicity, the second housing body 50 is omitted in FIGs. 3 and 4. FIG. 3 and FIG. 4 mainly illustrate a positional relationship of each component. Therefore, the relationship between the thicknesses of the components is not necessarily as illustrated in FIGs. 3 and 4.

As illustrated in FIGs. 3 and 4, the secondary battery 1 may further include a first protective member 30.
The first protective member 30 may protect a first connecting portion that electrically connects the exposed portions 11e of the unit cells 10 exposed from the first housing body 15, and a second connecting portion that electrically connects the exposed portions 12e of the unit cells 10 exposed from the first housing body 15. The exposed portions 11e and the exposed portions 12e may be connected to each other by, for example, ultrasonic welding, laser welding, or resistance welding. Although the exposed portions 11e of the positive electrode 11 and the exposed portions 12e of the negative electrode 12 are not connected to each other in FIGs. 3 and 4, they are actually connected to each other as described above.

The material of the first protective member 30 may be, for example, film-like polyolefin or polyimide. The first protective member 30 may be adhered to the exposed portions 11e and 12e by an adhesive layer (not illustrated). The material of the adhesive layer in the first protective member 30 is a material which is not easily eluted in the electrolytic solution (electrolyte). The material of the adhesive layer may be, for example, an acrylic adhesive.

In the present embodiment, the first protective member 30 may cover from the first connecting portion and the second connecting portion to a portion of the first housing body 15. Thus, when stresses are generated in the exposed portion 11e or 12e, the stresses are less likely to be concentrated, so that the possibility that the exposed portion 11e or 12e is damaged or broken in the vicinity of the first connecting portion and the second connecting portion can be reduced. However, the first protective member 30 may protect at least the first connecting portion and the second connecting portion, and the first protective member 30 may not necessarily cover from the first connecting portion and the second connecting portion to the first housing body 15.

As illustrated in FIGs. 3 and 4, the positive electrode 11 may have an electrode conductor 11a and a positive electrode active material layer 11b. The negative electrode 12 may have an electrode conductor 12a and a negative electrode active material layer 12b.

The electrode conductor 11a may be, for example, an aluminum foil. The thickness of the electrode conductor 11a may be 5 µm or more and 25 µm or less, for example, 10 µm. The electrode conductor 12a may be, for example, a copper foil. The thickness of the electrode conductor 12a may be 5 µm or more and 25 µm or less, for example, 10 µm.

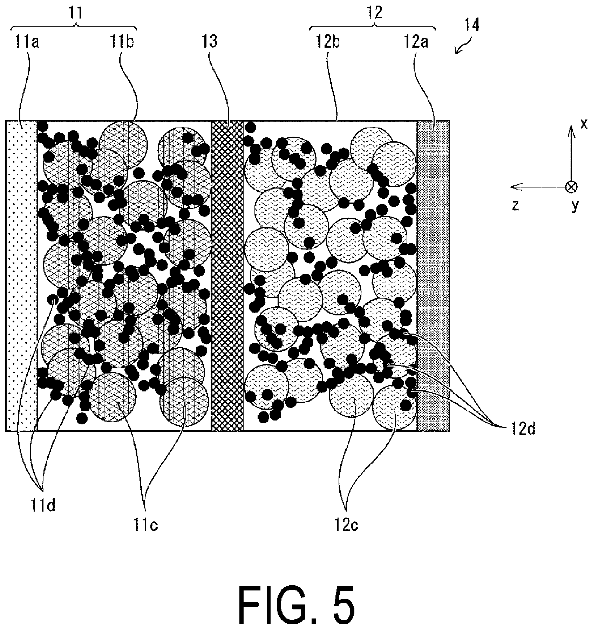

FIG. 5 is a cross-sectional view illustrating a specific structure of the electrode body 14. As illustrated in FIG. 5, the positive electrode active material layer 11b may be a layer of a positive electrode material that is a mixture of a positive electrode active material 11c and a conductive additive 11d. The negative electrode active material layer 12b may be a layer of a negative electrode material which is a mixture of a negative electrode active material 12c and a conductive additive 12d. The positive electrode active material 11c may be, for example, lithium cobalt oxide, lithium nickel oxide, lithium iron phosphate, or lithium manganese oxide. The negative electrode active material 12c may be, for example, graphite or lithium titanate. The conductive additives 11d and 12d may be, for example, carbon black or acetylene black. However, the positive electrode active material 11c, the negative electrode active material 12c, the conductive additive 11d, and 12d are not limited thereto.

The positive electrode material may have a so-called clay-like property in which an electrolytic solution is mixed into a mixture composed of the positive electrode active material 11c and the conductive additive 11d. The negative electrode material may have a so-called clay-like property in which an electrolytic solution is mixed into a mixture composed of the negative electrode active material 12c and the conductive additive 12d. The positive electrode 11 may be formed by applying a positive electrode material to the electrode conductor 11a. The negative electrode 12 may be formed by applying a negative electrode material to the electrode conductor 12a.

The electrolytic solution is obtained by dissolving a lithium salt as an electrolyte in a non-aqueous solvent. The nonaqueous solvent may be a carbonate-based solvent. The carbonate-based solvent may be γ-butyrolactone, ethylene carbonate, or both γ-butyrolactone and ethylene carbonate. The carbonate-based solvent may contain another solvent as long as it contains at least one of γ-butyrolactone and ethylene carbonate. Examples of other solvents include propylene carbonate, dimethyl carbonate, dimethoxyethane, diethyl carbonate, tetrahydrofuran, and triethylene glycol dimethyl ether. The electrolyte may be lithium hexafluorophosphate or lithium bis (fluorosulfonyl) imide (LiFSI).

The electrode body 14 may further include a separator 13. The positive electrode 11, the negative electrode 12, and the separator 13 may have a positional relationship such that the positive electrode active material layer 11b and the negative electrode active material layer 12b are in contact with the separator 13. That is, the unit cell 10 may have a structure in which the positive electrode 11 and the negative electrode 12 are stacked with the separator 13 interposed therebetween. The separator 13 may function as an insulating member that insulates the positive electrode 11 and the negative electrode 12. As the separator 13, for example, a sheet-like nonwoven fabric or porous material may be used.

When a porous material is used as the separator 13, specifically, a porous film made of a thermoplastic resin having a melting point of about 80 °C to 140 °C may be used. As the thermoplastic resin, for example, a polyolefin-based polymer such as polypropylene or polyethylene, or polyethylene terephthalate may be used.

When a positive electrode material and a negative electrode material having a clay-like property are used, a binder may not be used between the positive electrode and the separator and between the negative electrode and the separator. The electrolytic solution is mixed into the positive electrode material and the negative electrode material before the positive electrode and the negative electrode are formed. Therefore, the performance of the positive electrode and the negative electrode can be improved. Since the electrolytic solution is mixed in the positive electrode material and the negative electrode material, the number of steps in electrode molding of the positive electrode and the negative electrode can be reduced as compared with the case of using the positive electrode material and the negative electrode material in which the electrolytic solution is not mixed. In the manufacturing step of the secondary battery, the step of injecting the electrolytic solution can be omitted. The positive electrode material and the negative electrode material can be applied to the electrode conductor more thickly than in the case of using a positive electrode material and a negative electrode material not mixed with an electrolytic solution. Therefore, in realizing a secondary battery with a predetermined amount of electricity storage, the number of electrode conductors and separators used can be smaller than when using the positive electrode material and negative electrode material that do not have clay-like property. Therefore, the material cost can be reduced, and the energy density can be increased.

The positive electrode material and the negative electrode material may not have a clay-like property. In this case, the electrolytic solution may not be mixed into the positive electrode active material 11c and the negative electrode active material 12c. For example, the positive electrode material may be a positive electrode slurry including a mixture of the positive electrode active material 11c and the conductive additive 11d, a binder, and a solution. The positive electrode slurry may be applied to the electrode conductor 11a and dried to form the positive electrode active material layer 11b. The negative electrode material may be a negative electrode slurry containing a mixture of the negative electrode active material 12c and the conductive additive 12d, a binder, and a solution. The negative electrode slurry may be applied to the electrode conductor 12a and dried to form the negative electrode active material layer 12b. The binder may be polyvinylidene fluoride (PVdF), polyethylene oxide (PEO), or the like. The solvent may be an organic solvent such as N-methyl-2-pyrrolidone (NMP). In this case, the inside of the unit cell 10 may be filled with an electrolytic solution, and the electrolytic solution may be impregnated and held in the separator 13.

The secondary battery according to the present disclosure preferably includes an electrode body including at least a positive electrode material, a negative electrode material, and an electrolytic solution. The secondary battery according to the present disclosure may be any secondary battery as long as the secondary battery is preliminarily charged and a gas is generated from the electrode body of the secondary battery body in the manufacturing stage.

### Manufacturing Process of Secondary Battery

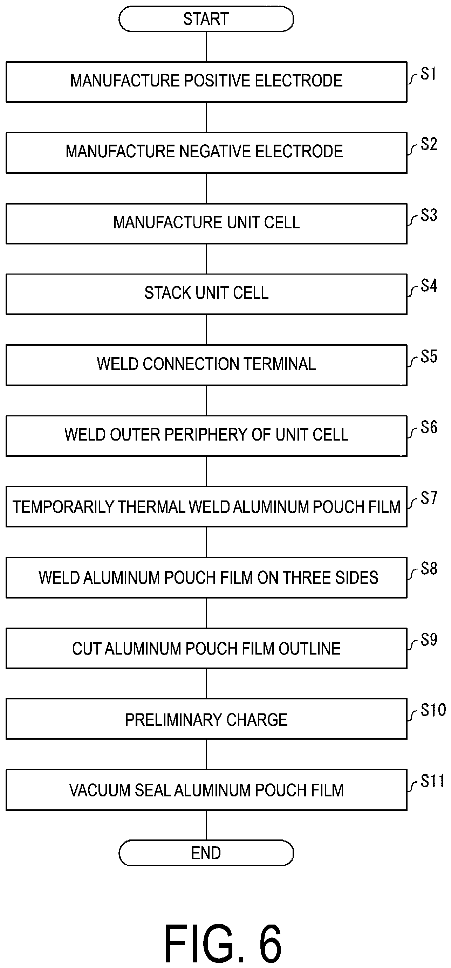

FIG. 6 is a flowchart illustrating an example of a manufacturing step (manufacturing method) of the secondary battery 1. The second housing body 50 is made of two aluminum pouch films.

In the manufacturing step of the secondary battery 1, a manufacturing apparatus (not illustrated) for manufacturing the secondary battery 1 first manufactures the positive electrode 11 and the negative electrode 12 (S1 and S2).

The positive electrode 11 is manufactured, for example, as follows. The manufacturing apparatus pulverizes the positive electrode active material 11c and the conductive additive 11d as raw materials, and then mixes the positive electrode active material 11c and the conductive additive 11d. The manufacturing apparatus kneads a mixture obtained by mixing the positive electrode active material 11c and the conductive additive 11d while introducing an electrolytic solution into the mixture to manufacture a clay-like positive electrode material (to form a slurry). Thereafter, the manufacturing apparatus applies the clay-like positive electrode material to the electrode conductor 11a formed by, for example, punching a metal foil (for example, an aluminum foil). That is, the positive electrode 11 in which the electrode conductor 11a and the positive electrode active material layer 11b are stacked and integrated is manufactured. The first housing body 15 may be laminated on one surface of the electrode conductor 11a in advance, and then the other surface may be coated with the positive electrode material. That is, the positive electrode 11 laminated by the first housing body 15 may be manufactured.

The negative electrode 12 is manufactured, for example, as follows. The manufacturing apparatus pulverizes the negative electrode active material 12c and the conductive additive 12d as raw materials, and then mixes the negative electrode active material 12c and the conductive additive 12d. The manufacturing apparatus kneads a mixture of the negative electrode active material 12c and the conductive additive 12d while introducing an electrolytic solution into the mixture, thereby manufacturing a clay-like negative electrode material (to form a slurry). Thereafter, the manufacturing apparatus applies the clay-like negative electrode material to the electrode conductor 12a formed by, for example, punching a metal foil (for example, a copper foil). That is, the negative electrode 12 in which the negative electrode conductor 12a and the negative electrode active material layer 12b are stacked and integrated is manufactured. The first housing body 15 may be laminated on one surface of the electrode conductor 12a in advance, and then the negative electrode material may be applied to the other surface. That is, the negative electrode 12 laminated by the first housing body 15 may be manufactured.

The manufacturing apparatus forms the electrode body 14 by bonding the positive electrode 11 and the negative electrode 12 to each other in a state where the separator 13 is interposed between the positive electrode 11 and the negative electrode 12. The first housing bodies 15 are stacked on the positive electrode 11 side and the negative electrode 12 side of the electrode body 14, respectively, and the first housing bodies 15 are bonded to each other at portions of the first housing bodies 15 outside the outer periphery of the electrode body 14, thereby sealing the electrode body 14 between the first housing bodies 15. In a portion of the first housing body 15 corresponding to the cutout portion 16, the first housing bodies 15 are not bonded to each other, and a space inside the unit cell 10 and a space outside the unit cell 10 communicate with each other. In other words, the electrode body 14 is sealed at the outer periphery except for a part of the outer periphery of the first housing body 15 on the positive electrode 11 side and the first housing body 15 on the negative electrode 12 side. A portion which is not sealed serves as the cutout portion 16. In this manner, the unit cell 10 is manufactured (S3).

The plurality of unit cells 10 are manufactured through the steps of S1 to S3. The manufacturing apparatus stacks the plurality of manufactured unit cells 10 (S4). The manufacturing apparatus welds the connection terminals 21 and 22 to the electrode conductors 11a and 12a of the stacked unit cells 10 (S5). To be specific, the manufacturing apparatus welds the exposed portions 11e of the plurality of electrode conductors 11a to each other, and welds the connection terminals 21 to the outermost exposed portions 11ea. The manufacturing apparatus welds the exposed portions 12e of the plurality of electrode conductors 12a to each other, and welds the connection terminals 22 to the outermost exposed portions 12ea.

The manufacturing apparatus welds the unit cells 10 to each other at the outer periphery except for the cutout portion 16 (S6). The unit cells 10 may be welded to each other at the outer peripheries of the unit cells 10 by, for example, ultrasonic welding, thermal welding, or an adhesive tape.

Subsequently, the manufacturing apparatus temporarily thermally welds the aluminum pouch film, which is the material of the second housing body 50, to the outermost surfaces of the one unit cell 10 and the other unit cell 10 located on the outermost side among the plurality of unit cells 10 whose outer peripheries are welded (S7). The temporary thermal welding is for determining the position of the aluminum pouch film with respect to the unit cell 10. The temporary thermal welding may be welding with low strength that can be peeled off from the unit cell 10 as necessary. After determining the position of the aluminum pouch film, the manufacturing apparatus bonds the aluminum pouch films to each other at a portion outside the outer periphery of the unit cell 10, and welds three sides out of four sides of the aluminum pouch film having a substantially rectangular shape (S8). In the case of a configuration in which one aluminum pouch film is folded in two and the unit cell 10 is located therein, two sides of the remaining three sides are welded. The manufacturing apparatus cuts the outer shape of the aluminum pouch film into a desired shape in a state where the three sides of the aluminum pouch film are welded (S9). For example, the outer shape of the aluminum pouch film may be cut into a desired shape before temporary thermal welding is executed in the S7.

The manufacturing apparatus preliminary charges the electrode body 14 of the secondary battery in a state where three sides of the aluminum pouch film are welded (S10). The preliminary charging may be executed by a preliminary charging device 4 included in the manufacturing apparatus. The configuration and processing of the preliminary charging device 4 will be described in detail later. The preliminary charging is executed to form a high-quality solid electrolyte interphase (SEI) on the surface of the negative electrode 12. In particular, during preliminary charging, gas is generated from the electrode body 14. The gas is, for example, a by-product generated at the time of SEI formation by a reaction between the electrolytic solution, the negative electrode material, and the like. The gas is generated by, for example, electrolysis of a trace amount of water contained in the electrolytic solution or the like. The gas can be discharged from the cutout portion 16 and the non-welded portion of the aluminum pouch film.

Three sides of the aluminum pouch film housing the plurality of unit cells 10 are closed, and one side is opened. That is, the aluminum pouch film is only provided with an opening large enough to discharge the gas. Therefore, even when the electrolytic solution leaks from the unit cell 10 at the time of preliminary charging, the electrolytic solution can be retained in the aluminum pouch film. Therefore, the possibility of occurrence of production trouble can be reduced.

The manufacturing apparatus manufactures the secondary battery 1 by welding one side of the aluminum pouch film, which has not been welded until the step of preliminary charging in the S10, while removing air in the second housing body 50. In other words, the inside of the aluminum pouch film is vacuum-sealed (S11). In the vacuum sealing, by welding the last one side of the aluminum pouch film, the second housing body 50 is formed, and the secondary battery 1 can be manufactured.

The steps described above may be interchanged as necessary. For example, the manufacture of the positive electrode 11 and the manufacture of the negative electrode 12 may be executed in parallel, the negative electrode 12 may be manufactured after the manufacture of the positive electrode 11, or the positive electrode 11 may be manufactured after the manufacture of the negative electrode 12. Further, for example, the step of S5 may be executed before the step of S4, or the steps of S10 and S11 may be executed before the step of S9.

### Details of Preliminary Charging

Hereinafter, details of the preliminary charging in the S10 of FIG. 6 will be described. As described above, the preliminary charging is executed by the preliminary charging device 4. Hereinafter, a configuration example of the preliminary charging device 4 will be described, and then a processing example of the preliminary charging device 4 will be described.

### Configuration of Preliminary Charging Device

The preliminary charging device 4 may be a device that executes preliminary charging on the secondary battery being manufactured. The secondary battery to be preliminarily charged during manufacture has a structure in which the electrode body 14 can be charged by the preliminary charging device 4 and the gas generated inside the electrode body 14 can be discharged to the outside of the electrode body 14. In the present embodiment, the secondary battery being manufactured, which is a target of preliminary charging, is a secondary battery which is closed by, for example, welding three sides of an aluminum pouch film, and one side of which is not welded. In the following description, the secondary battery during manufacture is referred to as a secondary battery 1a.

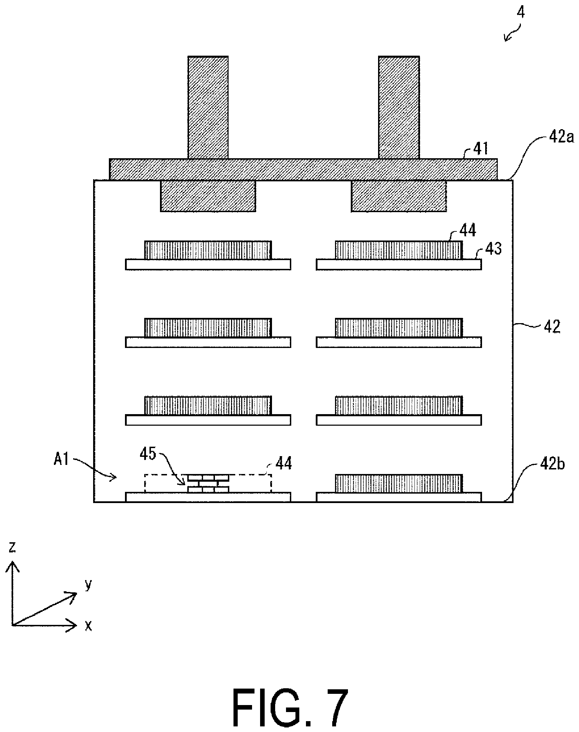

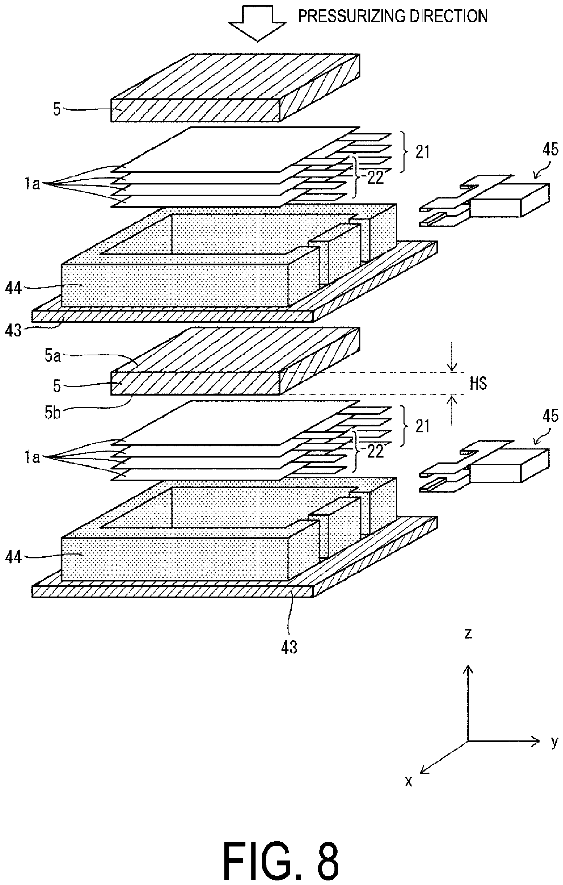

FIG. 7 is a schematic view illustrating an example of a schematic configuration of the preliminary charging device 4. FIG. 7 is a schematic view of the preliminary charging device 4 when the preliminary charging device 4 is viewed from the side (front side) on which the operator houses the secondary battery 1a. FIG. 8 is an exploded model view illustrating a state in which a spacer 5 is arranged between two trays 44 adjacent to each other in the vertical direction. FIG. 8 illustrates a state before the secondary battery 1a is housed in the tray 44.

As illustrated in FIG. 7, the preliminary charging device 4 may include a pressurizing portion 41 and a housing portion 42.

The pressurizing portion 41 may be a mechanism that brings the electrode body 14 of the secondary battery 1a into a pressurized state by mechanical pressure. For example, an air cylinder or a hydraulic cylinder may be used as the pressurizing portion 41. The housing portion 42 may be a housing in which the secondary battery 1a pressurized by the pressurizing portion 41 is housed.

The "pressurized state" refers to a state after application of a mechanical pressure to the electrode body 14 is started. That is, the "pressurized state" refers to a state from when the mechanical pressure is applied to the electrode body 14 until the mechanical pressure reaches a predetermined specified value, and a state in which the mechanical pressure of the specified value is applied to the electrode body 14. The specified value may be set, for example, in consideration of efficient degassing from the electrode body 14. The pressurizing direction may be a direction along a normal direction of two main surfaces (surfaces having the largest areas) forming the front and back in the secondary battery 1a portion.

The housing portion 42 may include a pedestal 43, a tray 44, and a clamp 45. A region A1 in FIG. 7 illustrates a state where the tray 44 is removed from the pedestal 43.

The tray 44 may be placed on the pedestal 43. The pedestal 43 may be provided in the housing portion 42 so as to be movable in the vertical direction (z-axis direction). The tray 44 may house at least two of the plurality of secondary batteries 1a (electrode bodies 14) housed in the housing portion 42. The tray 44 may have, for example, a shallow substantially box-like shape with one surface opened, and may be capable of housing the plurality of secondary batteries 1a in a stacked manner. In other words, the tray 44 may be capable of housing a plurality of sheet-shaped electrode bodies 14 constituting the secondary battery 1a in a state of being stacked in the stacking direction of the positive electrodes 11 and the negative electrodes 12 constituting the electrode bodies 14. In the example of FIG. 7, the housing portion 42 is provided with four pedestals 43 arranged in two rows in the vertical direction. The arrangement and the number of the pedestals 43 are not limited thereto. On the pedestal 43, the plurality of trays 44 are stacked and arranged along the pressurizing direction by the pressurizing portion 41 so that the pressurizing portion 41 can apply mechanical pressures to the secondary battery 1a housed in the tray 44. In other words, the plurality of trays 44 may be arranged so as to overlap each other in the pressurizing direction in a state where the plurality of trays 44 house the plurality of secondary batteries 1a, respectively. The mechanical pressure applied to the secondary battery 1a in the upper tray 44 by the pressurizing portion 41 is applied to the secondary battery 1a housed in the lower tray 44 through the upper tray 44. The pressurizing direction may be a direction along the normal direction of the main surface of the secondary battery 1a (electrode body 14).

In the present embodiment, the pressurizing portion 41 descends from the ceiling portion 42a to the bottom portion 42b of the housing portion 42, so that the pressurizing portion 41 may apply a mechanical pressure to the stacked arranged trays 44 from above (from the ceiling portion 42a side). Specifically, the pressurizing portion 41 moves downward to depress the uppermost tray 44 downward. In accordance with this depression, the uppermost pedestal 43 is lowered. When the pressurizing portion 41 is further lowered, the pedestal 43 at the uppermost stage pushes the pedestal 43 at the lower stage downward. That is, when the pressurizing portion 41 is lowered, the upper pedestal 43 pushes the lower pedestal 43, so that a mechanical pressure is applied to the plurality of secondary batteries 1a between the uppermost pedestal 43 and the lowermost pedestal 43. Accordingly, the pressurizing portion 41 may put each of the plurality of secondary batteries 1a housed in the tray 44 into a pressurized state.

Since the plurality of secondary batteries 1a are stacked and housed in the plurality of trays 44, the posture of the secondary battery 1a at the time of pressurization can be stabilized as compared with the case where all the secondary batteries 1a are collectively stacked. The plurality of trays 44 are arranged in a stacked manner, and a mechanical pressure is applied from above the plurality of stacked trays 44, whereby all the secondary batteries 1a portions can be collectively pressurized by one pressurizing portion 41.

In the present embodiment, the pressurizing portion 41 is provided on the ceiling portion 42a side and moves from the ceiling portion 42a to the bottom portion 42b to apply the mechanical pressure to the electrode body 14 of the secondary battery 1a, but no such limitation is intended. For example, the pressurizing portion 41 may be provided on the bottom portion 42b side and move from the bottom portion 42b to the ceiling portion 42a to apply the mechanical pressure to the electrode body 14 of the secondary battery 1a. The pressurizing portion 41 may be provided on each of the ceiling portion 42a and the bottom portion 42b. That is, the mechanical pressure is applied from at least one of the upper side and the lower side of the plurality of trays 44 to the electrode body 14 of the secondary battery 1a housed in the plurality of stacked trays 44.

As described above, the preliminary charging device 4 illustrated in FIG. 7 has a structure in which a mechanical pressure is applied from above the preliminary charging device 4 in a state where the secondary battery 1a is arranged in the housing portion 42 such that the main surface of the secondary battery 1a is substantially parallel to the horizontal plane. However, the preliminary charging device 4 may apply a mechanical pressure from the side of the preliminary charging device 4 in a state where the secondary battery 1a is arranged in the housing portion 42 such that the main surface of the secondary battery 1a is substantially perpendicular to the horizontal plane. In this case, the plurality of trays 44 may be arranged so that the opened one surface faces the lateral direction of the preliminary charging device 4. That is, the plurality of trays 44 are arranged along the pressurizing direction.

In other words, in the housing portion 42, the plurality of secondary batteries 1a (electrode bodies 14) may be arranged side by side such that at least one of the two main surfaces of one secondary battery 1a faces a main surface of another secondary battery 1a. In that state, the preliminary charging device 4 may apply the mechanical pressure from the side of at least one of the two outermost electrode bodies. In this case, the preliminary charging device 4 can collectively pressurize the plurality of secondary batteries 1a.

The clamp 45 may be a connecting portion through which the preliminary charging device 4 supplies a current to (energizes) the electrode body 14 of the secondary battery 1a. As illustrated in FIG. 7, the clamp 45 is provided on the rear surface side of the preliminary charging device 4. The clamp 45 is provided facing the tray 44 placed on each pedestal 43. The clamp 45 electrically connects the preliminary charging device 4 to the connection terminals 21 and 22 by clamping the connection terminals 21 and 22 of the plurality of secondary batteries 1a stacked and housed in each tray 44. However, the mechanism for supplying a current to the connection terminals 21 and 22 is not limited to a mechanism for clamping each of the connection terminals 21 and 22, such as the clamp 45, and has a configuration in which the preliminary charging device 4 can be electrically connected to the connection terminals 21 and 22. The preliminary charging device 4 supplies a current to the electrode body 14 in a state where, for example, about two to ten secondary batteries 1a housed in one tray 44 are electrically connected to each other, thereby executing preliminary charging on the electrode body 14. The preliminary charging device 4 may supply a current of, for example, 5A or more and 80A or less to the connection terminals 21 and 22. The magnitude of the current may be appropriately adjusted so that a predetermined current flows through one electrode body 14.

As described above, the plurality of unit cells 10 are connected to the connection terminals 21 and 22, respectively. Therefore, the electrode bodies 14 of the plurality of unit cells 10 can be simultaneously charged only by electrically connecting the connection terminals 21 and 22 to the preliminary charging device 4. Therefore, the manufacturing efficiency of the secondary battery 1 can be improved, and hence the producibility of the secondary battery 1 can be improved.

In the example of FIG. 8, four sheets of secondary battery 1a are stacked and housed in the tray 44, but the number of sheets is not limited to four, and a plurality of sheets of secondary battery 1a may be stacked and housed. The number of secondary batteries 1a housed in the tray 44 may be determined in advance, and for example, 2 to 10 secondary battery 1a may be stacked and housed.

As illustrated in FIG. 8, the spacer 5 may be arranged between two adjacent trays 44. The pressurizing portion 41 may bring each of the plurality of secondary batteries 1a into a pressurized state with the spacer 5 being arranged therein. The size of the upper surface 5a and the lower surface 5b of the spacer 5 may be a size such that the spacer 5 can be housed in the tray 44. The height (thickness) HS of the spacer 5 is a thickness such that two adjacent trays 44 do not come into contact with each other when pressurization is performed by the pressurizing portion 41 in a state where the specified number of secondary batteries 1a are housed in the trays 44. By arranging such a spacer 5, the possibility of occurrence of a situation in which the trays 44 come into contact with each other at the time of pressurization by the pressurizing portion 41 and the electrode body 14 is not appropriately pressurized can be reduced.

The mechanical pressure applied to the secondary battery 1a by the pressurizing portion 41 may be equivalent to the mechanical pressure applied to the plurality of secondary batteries 1 in a power storage device (not illustrated) modularized by stacking the plurality of secondary batteries 1. That is, the mechanical pressure applied to the electrode body 14 during preliminary charging and the mechanical pressure applied to the electrode body 14 in the power storage device as a completed product may be equal to each other. In the power storage device, an elastic member may be provided on both side surfaces of a housing constituting the power storage device to apply mechanical pressure to the plurality of secondary batteries 1 from both sides of the plurality of stacked secondary batteries 1. The mechanical pressure can be, for example, greater than or equal to 0.1 kgf/cm² and 1.4 kgf/cm².

In the present embodiment, the plurality of trays 44 are provided in the housing portion 42, but at least one tray 44 is provided. Further, in the present embodiment, the plurality of secondary batteries 1a are housed in one tray 44, but at least one secondary battery 1a is housed. That is, the preliminary charging device 4 preferably applies a mechanical pressure to at least one electrode body 14.

The tray 44 and the spacer 5 may be made of an insulating material, for example, a plastic such as polyethylene or polyvinyl chloride. The tray 44 and the spacer 5 may be made of the same material or different materials. The shape of the tray 44 is not limited to a shallow box shape as long as the secondary battery 1a can be placed on the tray 44. The shape of the tray 44 may be, for example, a tray-like shape such as a flat plate, or a tray-like plate on which guide pins for positioning a portion for housing the secondary battery 1a are erected.

In the present specification, housing the secondary battery 1a (electrode body 14) in the tray 44 means arranging at least one secondary battery 1a (electrode body 14) at a predetermined position in the tray 44. In the above description, an example in which the secondary battery 1a is housed in the tray 44 has been described. However, the unit cell 10 may be housed in the tray 44, and the preliminary charging device 4 may apply a mechanical pressure to the unit cell 10.

### Processing of Preliminary Charging Device

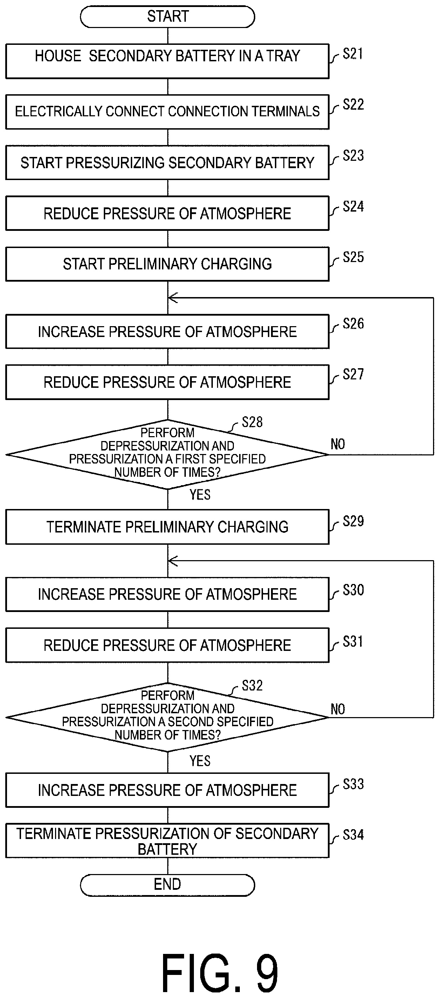

A specific process when the preliminary charging device 4 preliminary charges the electrode body 14 will be described with reference to the flowchart of FIG. 9. FIG. 9 is a flowchart illustrating an example of the process of the preliminary charging device 4.

First, an operator prepares at least one tray 44 and houses the plurality of secondary batteries 1a in the tray 44 (S21). The tray 44 is arranged in the housing portion 42 of the preliminary charging device 4. At this time, the operator may arrange the plurality of trays 44 in a stacked manner, and may arrange the spacer 5 between two adjacent trays 44. When the preliminary charging device 4 receives an input operation for starting preliminary charging by the operator, the preliminary charging device 4 causes the clamp 45 to clamp the connection terminals 21 and 22, thereby electrically connecting the clamp 45 to the connection terminals 21 and 22 (S22). In the state of S22, the preliminary charging device 4 is not supplying a current to the connection terminals 21 and 22. In this state, the preliminary charging device 4 starts pressurization of the secondary battery 1a by controlling the pressurizing portion 41 (S23). That is, in the S23, the preliminary charging device 4 starts to apply a mechanical pressure to the electrode body 14 of the secondary battery 1a. The S23 process may be executed prior to the S22 process, or the S22 process and the S23 process may be executed in parallel.

The preliminary charging device 4 may reduce the pressure in an atmosphere covering the electrode body 14 of the secondary battery 1a (first pressure reducing step: S24). Even if a gas is generated in the electrode body 14 before the electrode body 14 is preliminarily charged, the gas can be removed from the secondary battery 1a by the depressurization. Since the gas from the electrode body 14 can be removed in the first pressure reducing step, the adhesion between the members of the secondary battery 1a can be improved.

The "atmosphere covering the electrode body 14 (atmosphere of the electrode body 14)" refers to a gas filling the environment in which the secondary battery 1a is placed, and may be, for example, air. However, the periphery of the secondary battery 1a may be filled with a gas other than air (for example, nitrogen gas). In the present embodiment, the atmosphere of the electrode body 14 refers to the air filling the inside of the housing portion 42.

The "pressure reducing state" means a state in which the pressure around the electrode body 14 (in the present embodiment, the air pressure in the housing portion 42) is lower than the pressure immediately before the change. That is, the "pressure reducing state" includes a state in which the pressure around the electrode body 14 reaches a predetermined first specified value from the pressure immediately before the change, and a state in which the pressure around the electrode body 14 is maintained at the pressure of the first specified value. The first specified value may be set, for example, in consideration of efficient preliminary charging of the electrode body 14 and efficient degassing from the secondary battery 1a.

The preliminary charging device 4 may start preliminary charging the electrode body 14 after reducing the pressure in the atmosphere of the electrode body 14 (S25). That is, in the S25, the preliminary charging device 4 starts supplying the current to the electrode body 14 via the clamp 45.

The preliminary charging device 4 may increase the pressure in the atmosphere of the electrode body 14 (pressure increasing step: S26). The "pressure increasing state" means a state in which the pressure around the electrode body 14 is higher than the pressure immediately before the change. That is, the "pressure increasing state" includes a state in which the pressure around the electrode body 14 reaches a predetermined second specified value from the pressure immediately before the change, and a state in which the pressure around the electrode body 14 is maintained at the pressure of the second specified value. The second specified value may also be set in consideration of, for example, efficient preliminary charging of the electrode bodies 14 and efficient degassing from the secondary battery 1a.

For example, in the first pressure reducing step of the S24, the preliminary charging device 4 may change the atmosphere of the electrode body 14 from an atmospheric state to a vacuum state. In the pressure increasing step of the S26, the preliminary charging device 4 may change the atmosphere of the electrode body 14 from a vacuum state to an atmospheric state. In this case, the first specified value may be about 10 ⁻¹ to 10 ⁻³ atm, and the second specified value may be about 1 atm.

Further, for example, a first valve may be provided in the middle of a connection pipe (not illustrated) that connects the housing portion 42 and a vacuum pump (not illustrated). A second valve may be provided in the middle of a connection pipe (not illustrated) which connects the inside and the outside of the housing portion 42 or a connection pipe (not illustrated) which connects the housing portion 42 and a gas supply unit (not illustrated) such as nitrogen. In this case, the preliminary charging device 4 may bring the inside of the housing portion 42 (that is, the atmosphere of the electrode body 14) into a pressure reducing state by bringing the first valve into an open state and bringing the second valve into a closed state. The preliminary charging device 4 may bring the inside of the housing portion 42 into a pressure increasing state by bringing the second valve into an open state and bringing the first valve into a closed state.

The preliminary charging device 4 starts the pressure increasing step in the S26 after the start of preliminary charging of the electrode bodies 14 in the S25, but no such limitation is intended. The preliminary charging device 4 may start the preliminary charging of the electrode body 14 in the S25 after the start of the S26 pressure increasing step, or the start of the preliminary charging of the electrode body 14 in the S25 and the start of the S26 pressure increasing step may be executed at the same time. The pressure increasing step of the S26 is executed after the first pressure reducing step of the S24.

Specifically, the preliminary charging device 4 may start preliminary charging the electrode body 14 before bringing the second valve into an open state and the first valve into a closed state. In this case, the preliminary charging is started during the first pressure reducing step. The preliminary charging device 4 may start preliminary charging of the electrode body 14 at the same time when bringing the second valve into an open state and the first valve into closed state. The preliminary charging device 4 may start preliminary charging the electrode body 14 before the pressure around the electrode body 14 reaches the second specified value after the second valve is brought into an open state and the first valve into a closed state. The preliminary charging device 4 may start preliminary charging after the second valve is brought into an open state, the first valve is brought into a closed state, and the pressure around the electrode body 14 reaches the second specified value.

The preliminary charging device 4 may reduce the pressure in the atmosphere of the electrode body 14 (second pressure reducing step: S27). For example, also in the second pressure reducing step, the preliminary charging device 4 may change the atmosphere of the electrode body 14 from an atmospheric state to a vacuum state. The preliminary charging device 4 determines whether the pressure increasing step of the S26 and the second pressure reducing step of the S27 have been executed the first specified number of times (S28). In the present embodiment, the first specified number of times may be set to a plurality of times. The first specified number of times may be set such that, for example, the number of times each of the pressure increasing step and the second pressure reducing step is executed is any of 2 to 10 times. When determining that the pressure increasing step in S26 and the second pressure reducing step in S27 have been executed the first specified number of times (YES in S28), the preliminary charging device 4 terminates the preliminary charging of the electrode bodies 14. On the other hand, when the preliminary charging device 4 determines that the pressure increasing step in S26 and the second pressure reducing step in S27 have not been executed the first specified number of times (NO in S28), the preliminary charging device 4 executes the process in S26 again.

As described above, the preliminary charging device 4 starts preliminary charging of the electrode body 14 in the S25 and terminates preliminary charging of the electrode body 14 in the S29. That is, in the present embodiment, the preliminary charging device 4 may execute the preliminary charging step of preliminary charging the electrode body 14 during the first pressure reducing step of the S24 or in the S25 to the S29 after the first pressure reducing step. The preliminary charging device 4 may execute the pressure increasing step of the S26 after the first pressure reducing step of the S24, and may execute the second pressure reducing step of the S27 after the pressure increasing step. By the pressure increasing step and the second pressure reducing step, in the pressure increasing state, the entire electrode body 14 can be charged substantially uniformly (without unevenness), and in the pressure reducing state, the amount of gas that escapes from the electrode body 14 per unit time can be made larger than in the pressure increasing state. Therefore, the electrode body 14 can be efficiently charged while efficiently removing a gas from the electrode body 14.

It has been found from an empirical rule that a phenomenon in which the entire electrode body 14 cannot be uniformly charged occurs during depressurization. This phenomenon is presumed to be due to an increase in the resistance of the electrode body 14 caused by expansion of the gas remaining in the electrode body 14 without escaping from the electrode body 14 at the time of depressurization. Therefore, in the preliminary charging step, the preliminary charging device 4 not only efficiently removes the gas from the electrode body 14 by executing the second pressure reducing step, but also increases the efficiency of charging the electrode body 14 by executing the pressure increasing step.

The preliminary charging device 4 may start the pressure increasing step at substantially the same time as the start of preliminary charging in the S25 and S26 after improving the adhesion of each member of the secondary battery 1a in the first pressure reducing step of the S24. Therefore, the preliminary charging device 4 can substantially uniformly charge the entire electrode body 14.

It is empirically found that the amount of the gas released from the electrode body 14 per unit time is larger when the pressure in the atmosphere of the electrode body 14 is intermittently reduced than when the pressure in the atmosphere of the electrode body 14 is continuously reduced. According to the empirical rule, by executing the pressure increasing step together with the second pressure reducing step as described above, the gas can be efficiently removed from the electrode body 14 during preliminary charging. That is, the electrode body 14 can be efficiently charged while efficiently removing gas from the electrode body 14.

In the period during which the electrode body 14 is preliminarily charged in the preliminary charging step, the period of the pressure increasing state in the pressure increasing step of the S26 may be longer than the period of the pressure reducing state in the second pressure reducing step of the S27. By setting the period of the pressure increasing state to be longer than the period of the pressure reducing state, the entire electrode body 14 can be charged more uniformly.

The period of the pressure increasing state in the S26 may be set to, for example, 5 minutes or more and 20 minutes or less. The period of the pressure reducing state in the S27 may be set to, for example, 1 minute or more and 10 minutes or less. The lengths of the periods of the pressure increasing state and the pressure reducing state are set in consideration of the amount of current, the length of the period of the preliminary charging step, the number of times the pressure increasing step of the S26 and the second pressure reducing step of the S27 are executed, and the like so that efficient preliminary charging and degassing can be executed.

In the present embodiment, as described above, the first specified number of times is set to a plurality of times. That is, the preliminary charging device 4 may alternately perform the pressure increasing step of the S26 and the second pressure reducing step of the S27 a plurality of times during the preliminary charging step. This makes it possible to intermittently execute the second pressure reducing step, the main purpose of which is to remove gas from the electrode body 14, and thus to uniformly degas the electrode body 14. However, the first specified number of times may be set to one time instead of a plurality of times. The first specified number of times is set in consideration of the amount of current, the first and second specified values, the value of the mechanical pressure, the lengths of the periods of the pressure increasing step and the second pressure reducing step, and the like so that efficient preliminary charging and degassing can be executed.

The preliminary charging device 4 may terminated the preliminary charging of the electrode body 14 during the second pressure reducing step of the S27. A gas is likely to be generated from the electrode body 14 by the preliminary charging of the electrode body 14. Therefore, the preliminary charging device 4 can efficiently remove the gas from the electrode body 14 by terminating the preliminary charging during the second pressure reducing step. However, the preliminary charging device 4 may terminate the preliminary charging of the electrode body 14 at the same time as the completion of the second pressure reducing step. The preliminary charging device 4 may terminate the preliminary charging of the electrode bodies 14 during the pressure increasing step of the S30 or simultaneously with the completion of the pressure increasing step, which is executed after the pressure increasing step and the second pressure reducing step are executed the first specified number of times.

The period of the preliminary charging step may be, for example, 50 minutes or more and 150 minutes or less. The charging rate may be, for example, 0.05 C or more and 0.3 C or less. The charging rate (C rate) is an indicator of the magnitude of current when charging and discharging the secondary battery. The 1C is defined as the current value when going from a fully charged state to a discharged state in one hour or the current value when going from a discharged state to a fully charged state in one hour. For example, the 2C means a current value at the time of changing from a fully charged state to a discharged state in 1/2 hour, or a current value at the time of changing from a discharged state to a fully charged state in 1/2 hour. The charging rate at the completion of charging may be, for example, 10% or more and 30% or less as long as the electrode body 14 can be charged with an amount of electricity corresponding to the irreversible capacity or more.

In the present embodiment, the preliminary charging device 4 may increase the pressure in the atmosphere of the electrode body 14 after the preliminary charging of the electrode body 14 is completed in the S29 (pressure increasing step: S30). Next, the preliminary charging device 4 may reduce the pressure in the atmosphere of the electrode body 14 (second pressure reducing step: S31). In this manner, the preliminary charging device 4 may execute the pressure increasing step and the second pressure reducing step after the preliminary charging is completed. By the pressure increasing step and the second pressure reducing step, the gas can be removed from the electrode body 14 even after the completion of the preliminary charging. According to the above-described empirical rule, by executing the pressure increasing step together with the second pressure reducing step, the gas can be efficiently removed from the electrode body 14 in the period after the completion of the preliminary charging. The preliminary charging device 4 may execute the pressure increasing step of the S30 and the second pressure reducing step of the S31 after the preliminary charging is completed even when the preliminary charging of the electrode body 14 is completed during the pressure increasing step of the S30 or at the same time as the completion of the pressure increasing step.

After the completion of the preliminary charging, the period of the pressure reducing state by the second pressure reducing step of the S31 may be longer than the period of the pressure increasing state by the pressure increasing step of the S30. During the preliminary charging, it is important to charge the electrode body 14, and after the completion of the preliminary charging, it is important to discharge the gas generated in the electrode body 14 during the charging of the electrode body 14 from the electrode body 14. Therefore, by setting the period of the second pressure reducing state to be longer than the period of the pressure increasing state, the gas can be efficiently removed from the electrode body 14 in the period after the completion of the preliminary charging.

The period of the pressure increasing state in the S30 may be, for example, 1 minute or more and 10 minutes or less. The period of the pressure reducing state in the S31 may be, for example, 5 minutes or more and 20 minutes or less. The lengths of the periods of the pressure increasing state and the pressure reducing state are set in consideration of the number of times of execution of the pressure increasing step of the S30 and the second pressure reducing step of the S31 and the like so that efficient degassing can be executed.

In the present embodiment, as described above, the preliminary charging device 4 executes the pressure increasing step and the second pressure reducing step at least once each in each of the period of the preliminary charging step from S25 to S29 and the period after the preliminary charging step from S30 to S34. When one execution of each of the pressure increasing step and the second pressure reducing step is referred to as one cycle, the time required for one cycle may be longer in the period after the preliminary charging step (the processing time of S30 and S31) than in the period of the preliminary charging step (the processing time of S26 and S27). The execution of the pressure increasing step and the second pressure reducing step during the period of the preliminary charging step is mainly intended to efficiently perform both substantially uniform charging of the electrode body 14 and degassing from the electrode body 14. On the other hand, the execution of the pressure increasing step and the second pressure reducing step in the period after the preliminary charging step is mainly intended to degas the electrode body 14. By setting the time required for one cycle as described above, it is easy to realize the above main object.

The preliminary charging device 4 determines whether the pressure increasing step of the S30 and the second pressure reducing step of the S31 have been executed the second specified number of times (S32). In the present embodiment, the second specified number of times may be set to a plurality of times. For example, the second specified number of times may be set such that the number of times each of the pressure increasing step and the second pressure reducing step is executed is any of 2 to 10 times. That is, the preliminary charging device 4 may alternately execute the pressure increasing step of the S30 and the second pressure reducing step of the S31 a plurality of times even in the period after the completion of the preliminary charging. However, the second specified number of times may be set to one time instead of a plurality of times. The second specified number of times is also set in consideration of the amount of current, the first and second specified values, the value of the mechanical pressure, the lengths of the periods of the pressure increasing step and the second pressure reducing step, and the like so that efficient preliminary charging and degassing can be executed.

When the preliminary charging device 4 determines that the pressure increasing step in S30 and the second pressure reducing step in S31 have been executed the second specified number of times (YES in S32), the preliminary charging device 4 may increase the pressure in the atmosphere of the electrode body 14 (S33). The preliminary charging device 4 terminates the pressurization of the secondary battery 1a (S34). The S34 process may be executed prior to the S33 process, or the S33 process and the S34 process may be executed in parallel. On the other hand, when the preliminary charging device 4 determines that the pressure increasing step in S30 and the second pressure reducing step in S31 have not been executed the second specified number of times (NO in S32), the preliminary charging device 4 executes the process in S30 again.

As described above, the preliminary charging device 4 starts applying the mechanical pressure to the electrode body 14 in the S23, and terminates applying the mechanical pressure to the electrode body 14 in the S34. That is, in the present embodiment, the preliminary charging device 4 may continuously execute the pressurizing step of bringing the electrode body 14 into the pressurized state by the mechanical pressure once at least in the period of the preliminary charging step and the period after the preliminary charging step. Further, in the present embodiment, the preliminary charging device 4 may execute the second pressure reducing step (pressure reducing step) of the S27 at least once in the period of the preliminary filling step, and may execute the second pressure reducing step (pressure reducing step) of the S31 at least once in the period after the preliminary filling step.

By executing the pressurizing step and the second pressure reducing step during the preliminary charging, the gas generated during the preliminary charging can be removed from the electrode body 14. Since the pressurizing step and the second pressure reducing step are executed in the period after the completion of the preliminary charging, the gas remaining or generated in the electrode body 14 can be removed from the electrode body 14 in the period after the completion of the preliminary charging. Therefore, a larger amount of gas generated from the electrode body 14 can be removed from the electrode body 14.

In a case where the preliminary charging device 4 continuously executes the pressurizing step once, the pressurized state of the electrode body 14 by the mechanical pressure is continued during the period from the preliminary charging to the completion of the preliminary charging. Therefore, the gas can be efficiently removed from the electrode body 14. When the preliminary charging device 4 executes the second pressure reducing step at least once in each of the period during the preliminary charging and the period after the completion of the preliminary charging, the second pressure reducing step is executed intermittently. According to the above-described empirical rule, the gas can be efficiently removed from the electrode body 14 by intermittently executing the second pressure reducing step.

However, the preliminary charging device 4 may execute the pressurizing step a plurality of times in the period of the preliminary filling step and the period after the preliminary charging step. The preliminary charging device 4 may temporarily stop applying the mechanical pressure to the electrode body 14, for example, when the preliminary charging is completed in the S29. Thereafter, the preliminary charging device 4 may apply the mechanical pressure to the electrode body 14 again, for example, when the pressure increasing step of the S30 is executed.

The preliminary charging device 4 may continuously execute the second pressure reducing step once in the period of the preliminary filling step and the period after the preliminary charging step. For example, the preliminary charging device 4 may continuously execute the second pressure reducing step of the S27 until the pressure increasing step of the S33 is executed. In this case, the preliminary charging device 4 does not need to execute S28 and S30 to S32.

Further, in the present embodiment, the preliminary charging device 4 executes the pressurizing step in the period of the preliminary charging step and the period after the preliminary charging step, but may not execute the pressurizing step. Even in a case where the pressurizing step is not executed, the preliminary charging device 4 can remove the gas from the electrode body 14 by executing the pressure increasing step and/or the second pressure reducing step in the period of the preliminary charging step and/or the period after the preliminary charging step.

As described above, according to the manufacturing method of the secondary battery 1 of the present disclosure, the preliminary charging and the degassing from the electrode bodies 14 can be efficiently performed. Therefore, the possibility of occurrence of a defective secondary battery 1 can be reduced. Therefore, energy and resources consumed for manufacturing defective products of the secondary battery 1 can be saved, and thus contributing to achievement of a sustainable development goals (SDGs).

### Supplementary Note

In the present disclosure, the invention has been described above based on the various drawings and examples. However, the invention according to the present disclosure is not limited to each embodiment described above. That is, the embodiments of the invention according to the present disclosure can be modified in various ways within the scope illustrated in the present disclosure, and embodiments obtained by appropriately combining the technical means disclosed in different embodiments are also included in the technical scope of the invention according to the present disclosure. In other words, a person skilled in the art can easily make various variations or modifications based on the present disclosure. Note that these variations or modifications are included within the scope of the present disclosure.

For example, the preliminary charging device 4 may start preliminary charging the electrode body 14 before (for example, immediately before) the start of the first pressure reducing step or simultaneously with the first pressure reducing step. However, as described above, by executing the preliminary charging of the electrode body 14 during the first pressure reducing step or after the first pressure reducing step, the preliminary charging of the electrode body 14 can be executed in a state where the gas from the electrode body 14 is removed and the adhesion of each member of the secondary battery 1a is improved.

### REFERENCE SIGNS

1 Secondary battery
5 Spacer
10 Unit cell
11 Positive electrode
12 Negative electrode
13 Separator
14 Electrode body
21, 22 Connection terminal

## Claims

1. A manufacturing method of a secondary battery, comprising:
first pressure reducing of reducing a pressure in an atmosphere of an electrode body comprising a positive electrode material, a negative electrode material, and an electrolyte;
preliminary charging of preliminarily charging the electrode body;
pressure increasing of increasing the pressure in the atmosphere of the electrode body after the first pressure reducing and at least during the preliminary charging; and
second pressure reducing of reducing the pressure in the atmosphere of the electrode body after the pressure increasing and at least during the preliminary charging.

2. The manufacturing method of a secondary battery, according to claim 1, wherein
the preliminary charging is started during the first pressure reducing or after the first pressure reducing.

3. The manufacturing method of a secondary battery, according to claim 1 or 2, wherein
of a period in which the electrode body is preliminarily charged in the preliminary charging, a period of a pressure increasing state in the pressure increasing is longer than a period of a pressure reducing state in the second pressure reducing.

4. The manufacturing method of a secondary battery, according to any one of claims 1 to 3, wherein
the pressure increasing and the second pressure reducing are alternately executed a plurality of times during the preliminary charging.

5. The manufacturing method of a secondary battery, according to any one of claims 1 to 4, wherein
the pressure increasing and the second pressure reducing are executed after preliminary charging of the electrode body is completed in the preliminary charging.

6. The manufacturing method of a secondary battery, according to claim 5, wherein
when the pressure increasing and the second pressure reducing are executed after preliminary charging of the electrode body is completed in the preliminary charging, a period of the pressure reducing state in the second pressure reducing is longer than a period of the pressure increasing state in the pressure increasing.
